# EUROPEAN PATENT APPLICATION

(11) **EP 2 833 078 A1**
(43) Date of publication of application: **04.02.2015**
(21) Application number: 13769972.4
(22) Date of filing: 19.02.2013
(51) Int. Cl.: F24F 11/02, F24F 11/053

(54) **AIR CONDITIONER**

(30) Priority: 29.03.2012 JP 2012076288
(71) Applicant: Mitsubishi Electric Corporation, Tokyo 100-8310 (JP); Mitsubishi Electric Home Appliance Co., Ltd., Fukaya-shi, Saitama 369-1295 (JP)
(72) Inventor: FUJITA, Yoshiyuki, Fukaya-shi, Saitama 369-1295 (JP); SHIBATA, Hideo, Fukaya-shi, Saitama 369-1295 (JP); KABETA, Noriyoshi, Chiyoda-ku, Tokyo 102-0073 (JP); NISHIDA, Yuka, Fukaya-shi, Saitama 369-1295 (JP)
(74) Representative: Pfenning, Meinig & Partner GbR
(86) International application number: PCT/JP2013/053989
(87) International publication number: WO 2013/145944

(57) **Abstract**

There is provided an air conditioner which is easy to use and by which the user can confirm the level of energy saving of the operation being performed merely by viewing a display, and can easily recognize whether or not an energy-saving operation in which electric power consumption is reduced is being performed. The air conditioner includes a dehumidifying means for removing water in the air; an air blowing means, consisting of a motor and a blower fan, that sucks air in a room and blows out dried air, which is obtained by causing the sucked air to pass through the dehumidifying means, into the interior of the room; a humidity detecting means; a temperature detecting means; a surface temperature detecting means for detecting the surface temperature in the room within a predetermined range; a displaying means for displaying information by using one or both of letters and figures; and a controlling means for controlling the air blowing means, the temperature detecting means, and the displaying means. From the surface temperature detected by the surface temperature detecting means, the controlling means detects, within the predetermined range, that objects to be dried such as wet clothing are arranged; and according to the detection result, the number of rotations of the blower fan is changed during the operation of the dehumidifying means or the air blowing means, and further, according to the changed number of rotations, the level of energy saving is displayed on the displaying means.

## Description

### Technical Field

The present invention relates to an air conditioner for dehumidifying the interior of a room and, more particularly, to an air conditioner having a function of drying the wash, that is, objects to be dried, that are dried in the room.

### Background Art

Some conventional air conditioners are configured so as to recognize the decrease in sensible heat caused by the evaporation of water sucked up by objects to be dried by means of comparison using a controlling means between the detection result of temperature detected by an infrared detection means and the detection result of indoor atmosphere temperature detected by a temperature detecting means, and to determine the existence of the distribution of temperature lower than the indoor temperature caused by the decrease in sensible heat of the objects to be dried to be the arrangement range of the objects to be dried (for example, refer to Patent Literature 1).

### Citation List

### Patent Literature

Patent Literature 1: Japanese Patent Laid-Open No. 2007-240100 (pages 2 to 4, Figures 3 to 5)

### Summary of Invention

### Technical Problem

The above-described conventional air conditioner has a problem that, when the operation suitable for the drying of objects to be dried is performed based on the information on humidity and temperature, the electric power consumption differs depending on the operation, and the user cannot see this difference, so that, although the operation is actually an energy-saving operation in which electric power consumption is reduced, it is impossible to cause the user to recognize that the operation is an energy-saving operation.

The present invention has been made to solve the above-described problem, and accordingly an object thereof is to provide an air conditioner which is easy to use and by which the user can confirm the level of energy saving of the operation being performed merely by means of the viewing of a display, and can easily recognize whether or not an energy-saving operation in which electric power consumption is reduced is being performed.

### Means for Solving the Problems

An air conditioner of the present invention includes a dehumidifying means for removing water contained in air; an air blowing means, consisting of a motor and a blower fan, that sucks air in a room and blows out dried air, which is obtained by causing sucked air to pass through the dehumidifying means, into an interior of a room; a humidity detecting means for detecting a humidity of indoor air; a temperature detecting means for detecting a temperature of indoor air; a surface temperature detecting means for detecting a surface temperature in a room within a predetermined range; a displaying means for displaying information by using one or both of letters and figures; and a controlling means for controlling the air blowing means, the temperature detecting means, and the displaying means, wherein from a surface temperature detected by the surface temperature detecting means, the controlling means detects, within the predetermined range, that objects to be dried such as wet clothing are arranged, and
according to a detection result, a number of rotations of the blower fan is changed during operation of the dehumidifying means or the air blowing means, and further, according to a changed number of rotations, a level of energy saving is displayed on the displaying means.

### Advantageous Effect of Invention

According to the present invention, the level of energy saving in accordance with the change in the number of rotations of a blower fan or the like is displayed on a displaying means, so that the level of energy saving of the operation being performed can be confirmed, and if a display indicating that the level of energy saving is high is being accomplished, the user can easily recognize that an operation in which the electric power consumption is reduced is being performed, so that the ease of use is increased.

### Brief Description of the Drawings

Figure 1 is an appearance perspective view showing an air conditioner in accordance with a first embodiment of the present invention.
Figure 2 is a top plan view of a displaying means and an operating part of the air conditioner in accordance with the first embodiment of the present invention, which is viewed from the upside.
Figure 3 is a schematic configuration view showing the interior of the air conditioner in accordance with the first embodiment of the present invention.
Figure 4 is a schematic perspective view enlargedly showing a wind direction changing means shown in Figure 1.
Figure 5 is a conceptual view showing the detection range of an infrared sensor of the air conditioner in accordance with the first embodiment of the present invention.
Figure 6 is a part of a flowchart showing the action in the energy-saving drying mode of the air conditioner in accordance with the first embodiment of the present invention, showing Step 0 to Step 18 and Step 71.
Figure 7 is a part of the flowchart showing the action in the energy-saving drying mode of the air conditioner in accordance with the first embodiment of the present invention, showing Step 19 to Step 38.
Figure 8 is a part of the flowchart showing the action in the energy-saving drying mode of the air conditioner in accordance with the first embodiment of the present invention, showing Step 39 to Step 70.
Figure 9 is a part of the flowchart showing a part of the action in the energy-saving drying mode of the air conditioner in accordance with the first embodiment of the present invention, showing Step 42 to Step 54.
Figure 10(a) is a schematic view showing a display example representing a high level of energy saving in the air conditioner in accordance with the first embodiment of the present invention, Figure 10(b) is a schematic view showing a display example representing a medium level of energy saving in the air conditioner in accordance with the first embodiment of the present invention, and Figure 10(c) is a schematic view showing a display example representing a low level of energy saving in the air conditioner in accordance with the first embodiment of the present invention.

### Description of Embodiment

### First embodiment

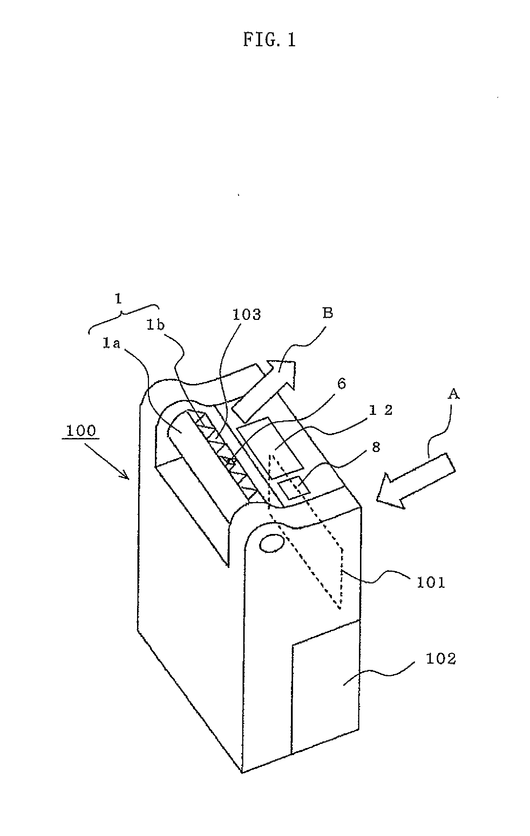

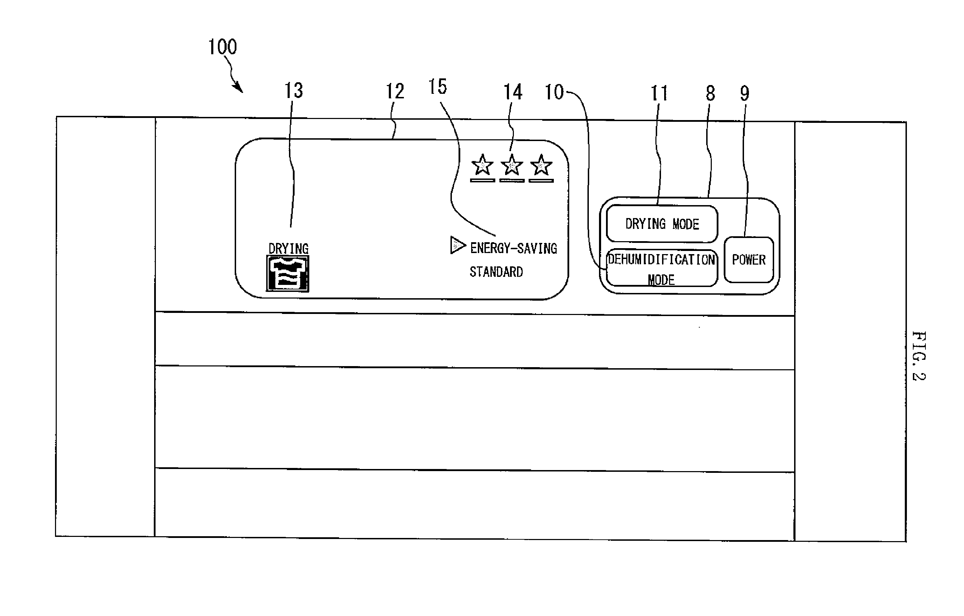

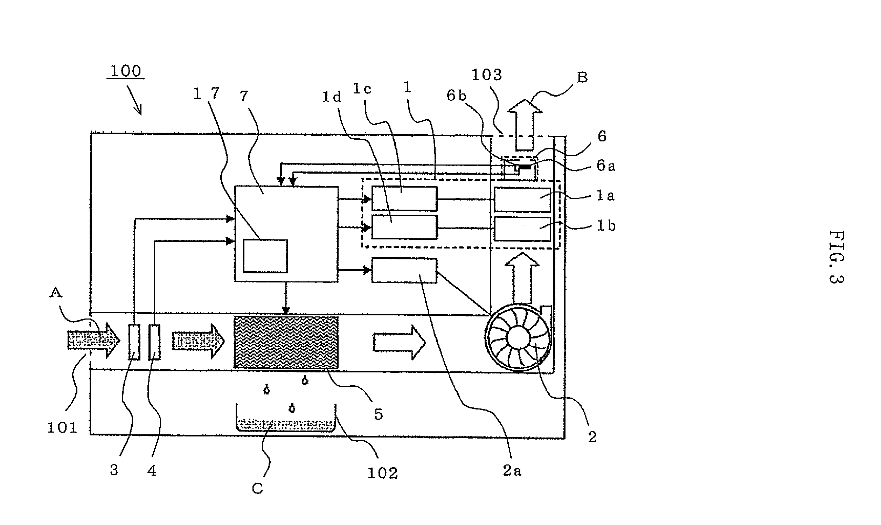

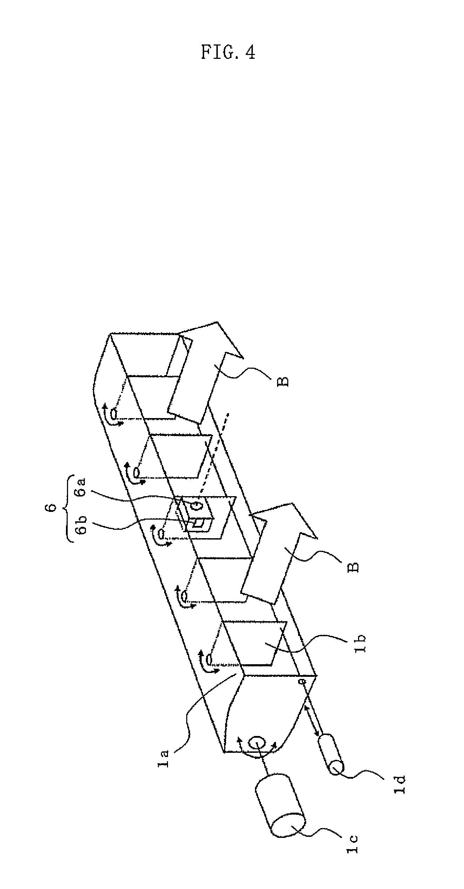

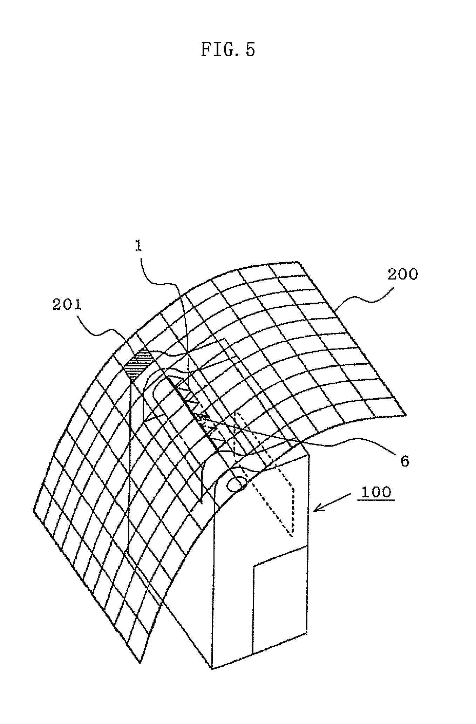

Figure 1 is an appearance perspective view showing an air conditioner in accordance with a first embodiment of the present invention, Figure 2 is a top plan view of a displaying means and an operating part of the air conditioner in accordance with the first embodiment of the present invention, which is viewed from the upside, Figure 3 is a schematic configuration view showing the interior of the air conditioner in accordance with the first embodiment of the present invention, Figure 4 is a schematic perspective view enlargedly showing a wind direction changing means shown in Figure 1, and Figure 5 is a conceptual view showing the detection range of an infrared sensor of the air conditioner in accordance with the first embodiment of the present invention.

As shown in Figure 1, the air conditioner in accordance with the first embodiment of the present invention is configured by an air conditioner housing 100 configured so as to be self-standable, a suction port 101 for taking indoor air A into the air conditioner housing 100, a water storage tank 102 for storing water that is removed from the air taken into the suction port 101, and an exhaust port 103 for discharging dried air B, from which water has been removed, from the air conditioner housing 100 into the interior of a room.

The exhaust port 103 is provided with a wind direction changeable means 1 that can change the wind direction of the dried air B, and the wind direction changeable means 1 is configured by a longitudinal louver 1a for changing the direction of wind in the vertical direction and a transverse louvers 1b for changing the direction of wind in the horizontal direction. The water storage tank 102 is detachably mounted to the air conditioner housing 100.

Further, as shown in Figure 2, on the top surface of the air conditioner housing 100, there are provided an operating part 8 and a displaying means 12 for displaying various pieces of information on operation status, temperature, humidity, and the like. The operating part 8 is provided with, for example, a power switch 9, a dehumidification mode switch 10, and a drying mode switch 11.

Also, as shown in Figure 3, the above-described air conditioner includes a blower fan 2 constituting an air blowing means for generating a series of air flows that suck the indoor air A through the suction port 101 and discharge the dried air B through the exhaust port 103, a fan motor 2a for rotating the blower fan 2, a temperature sensor 3 (temperature detecting means) for detecting the temperature of the indoor air A sucked through the suction port 101, a humidity sensor 4 (humidity detecting means) for detecting the humidity of the indoor air A, and a dehumidifying means 5 for removing water contained in the indoor air A and generating the dried air B.

Further, the above-described air conditioner includes a longitudinally turnable motor 1c for turning the longitudinal louver 1a constituting the wind direction changeable means 1 in the vertical direction, a transversely turnable motor 1d for turning the transverse louvers 1b constituting the wind direction changeable means 1 in the horizontal direction, an infrared sensor 6 that is a surface temperature detecting means, and a control circuit 7 that incorporates a controlling means for controlling the wind direction changeable means 1, and controls the infrared sensor 6, which is a surface temperature detecting means, and the like.

The various sensors such as the temperature sensor 3, the humidity sensor 4, and the infrared sensor 6 are configured so as to be controlled by the control circuit 7 and to detect various kinds of data, and furthermore, based on the detection results, the control circuit 7 controls the drive of the dehumidifying means 5, the fan motor 2a, the displaying means 12, and the like.

The dehumidifying means 5 has only to be a means capable of removing and condensing water in the air. For example, as the most common system, there are used a system that forms a heat pump circuit and condenses water in the air in an evaporator, a desiccant system that condenses water in the air, which has been removed by a adsorbent, by using a heat exchanger, and the like system. The water removed from the indoor air A by the dehumidifying means 5 is stored in the water storage tank 102 as condensed water C.

As shown in Figure 4, the longitudinal louver 1a has a rectangular opening extending in the width direction of the air conditioner housing 100, and is configured so as to be turnable in the vertical direction substantially with the rotating shaft of the longitudinally turnable motor 1 being the axis. The transverse louvers 1b are arranged at equal intervals in the longitudinal louver 1a, are pivotally supported on the far portion on the side opposite to the opening of the longitudinal louver 1a, and are configured so as to interlock with the drive of the transversely turnable motor 1d.

The infrared sensor 6 is mounted onto one surface of the transverse louver 1b arranged approximately in the center of the longitudinal louver 1a. Thereby, the detection range of surface temperature detected by the infrared sensor 6 is made approximately equal to the direction of the dried air B which direction is changed by the wind direction changeable means 1.

That is to say, the infrared sensor 6 can detect the surface temperature of objects lying in the whole region within the range in which the wind direction changeable means 1 can blow air, for example, clothing and towels that are wet after washing (hereinafter, referred generally to as "objects to be dried").

As the infrared sensor 6, an infrared sensor utilizing, for example, a thermoelectromotive force effect is used. The infrared sensor 6 is configured by an infrared ray absorbing membrane 6a that receives heat radiation (infrared rays) generated from the surface in a predetermined region, and a thermistor 6b for detecting the temperature of the infrared ray absorbing membrane 6a (refer to Figures 3 and 4).

This infrared sensor 6 converts the difference between the temperature (hot contact) of a thermosensible portion of the infrared ray absorbing membrane 6a that is raised by the absorption of heat radiation and the temperature (cold contact) of the infrared ray absorbing membrane 6a detected by the thermistor 6b into an electric signal such as voltage, and sends the electric signal to the control circuit 7. From the magnitude of this electric signal, the surface temperature in the predetermined region can be detected.

Hereunder, the method for detecting the surface temperature in the predetermined region is explained with reference to Figure 5.

As shown in Figure 5, in the case where the whole region that can be detected by the infrared sensor 6 is taken as a whole scanning range 200, the whole scanning range 200 is a planar range spreading in the transverse direction (horizontal direction) and the longitudinal direction (vertical direction).

The infrared sensor 6 is controlled so as to detect the surface temperature in the whole scanning range 200 for each area divided into plural numbers in both of the horizontal direction and the vertical direction (for example, 201 denotes an area of one section). Thereby, a detailed temperature map for a wide-range region can be prepared.

The action of the control circuit 7 is started by the input of the power switch 9 shown in Figure 2. When the selection of dehumidification mode is detected by the operation of the dehumidification switch 10 provided in the operating part 8, air can be blown through the exhaust port 103 by driving the wind direction changeable means 1 so that the indoor humidity is the optimum humidity, the blower fan 2 is rotated by driving the fan motor 2a, and the dehumidifying means 5 is driven.

Also, the control circuit 7 drives the longitudinally turnable motor 1c and the transversely turnable motor 1d of the wind direction changeable means 1 so that air is blown in the direction of the desired region of the interior of the room. Thereby, the indoor air A is taken into the air conditioner housing 100 through the suction port 101, and after the temperature and humidity of the interior of the room have been detected by the temperature sensor 3 and the humidity sensor 4, respectively, the indoor air A is turned to the dried air B by the dehumidification accomplished by the dehumidifying means 5, and the dried air B is blown out into the interior of the room through the exhaust port 103.

Further, the action of the control circuit 7 is started by the input of the power switch 9 shown in Figure 2. When the selection of standard drying mode from the drying modes of objects to be dried represented by the wash such as clothing is detected by the operation of the drying mode switch 11 provided in the operating part 8, air can be blown through the exhaust port 103 by driving the wind direction changeable means 1, the blower fan 2 is rotated by driving the fan motor 2a, and the dehumidifying means 5 is driven.

Thereafter, the control circuit 7 reads the humidity of the interior of the room via the humidity sensor 4 from the indoor air A taken into the air conditioner housing 100, and determines whether or not the read humidity is higher than a preset humidity.

The preset humidity is numerical value data that is preset corresponding to the indoor temperature detected by the temperature sensor 3, and the configuration is made such that the preset humidity is stored as the numerical value data in the a storing means, not shown, incorporated in the control circuit 7, and is read out into the control circuit 7 as necessary.

When the indoor humidity is higher than the predetermined humidity as the result of humidity determination, the fan motor 2a and the wind direction changeable means 1 are controlled so that the dehumidifying capability of the dehumidifying means 5 is at the maximum until the indoor humidity decreases to a value not higher than the predetermined humidity.

When the indoor humidity is decreased to a value not higher than the predetermined humidity by the above-described control, the control circuit 7 detects the surface temperature of each area (201) divided into plural numbers by using the infrared sensor 6, identifies the range in which the objects to be dried are arranged from the detection result of surface temperature, controls the longitudinally turnable motor 1c and the transversely turnable motor 1d so that the dried air B hits the identified range, and turns the louvers 1a and 1b to the direction of the objects to be dried.

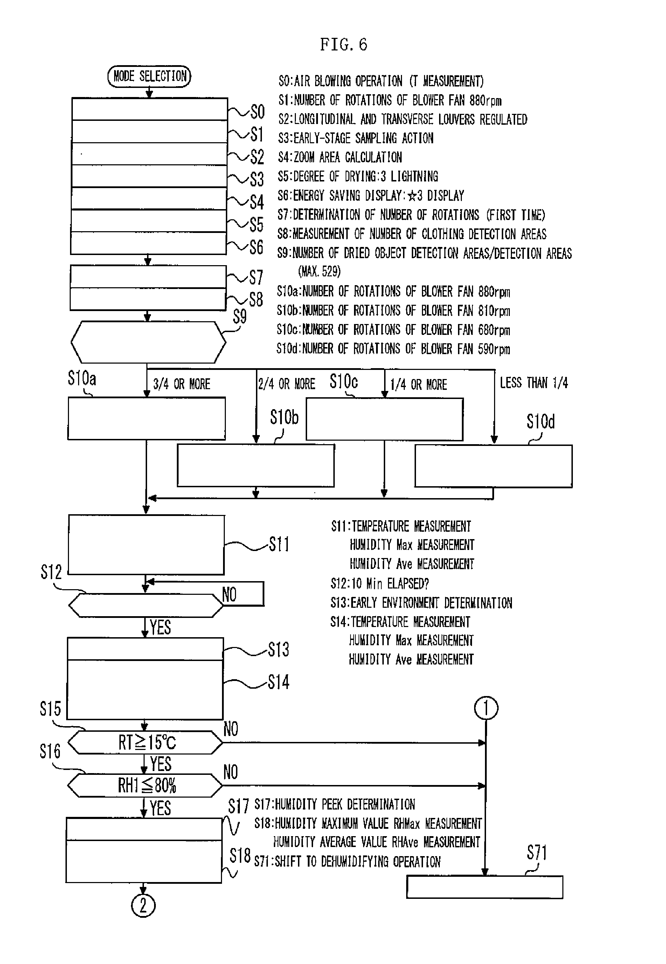

Next, the action at the time when an energy-saving drying mode, in which the objects to be dried are dried while electric power consumption is reduced, is selected from the drying modes is explained with reference to Figures 6 to 9.

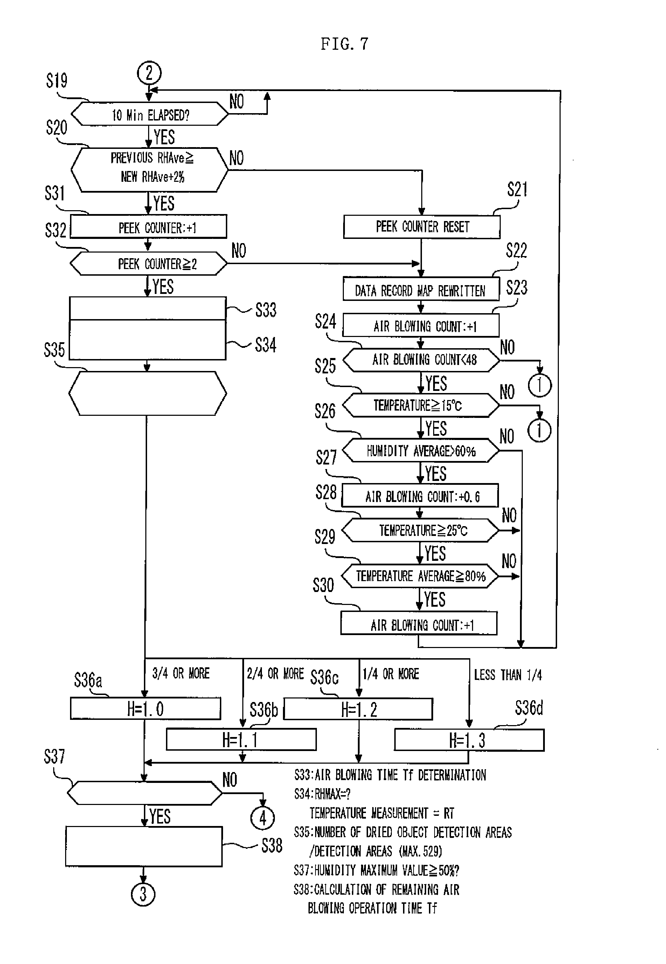

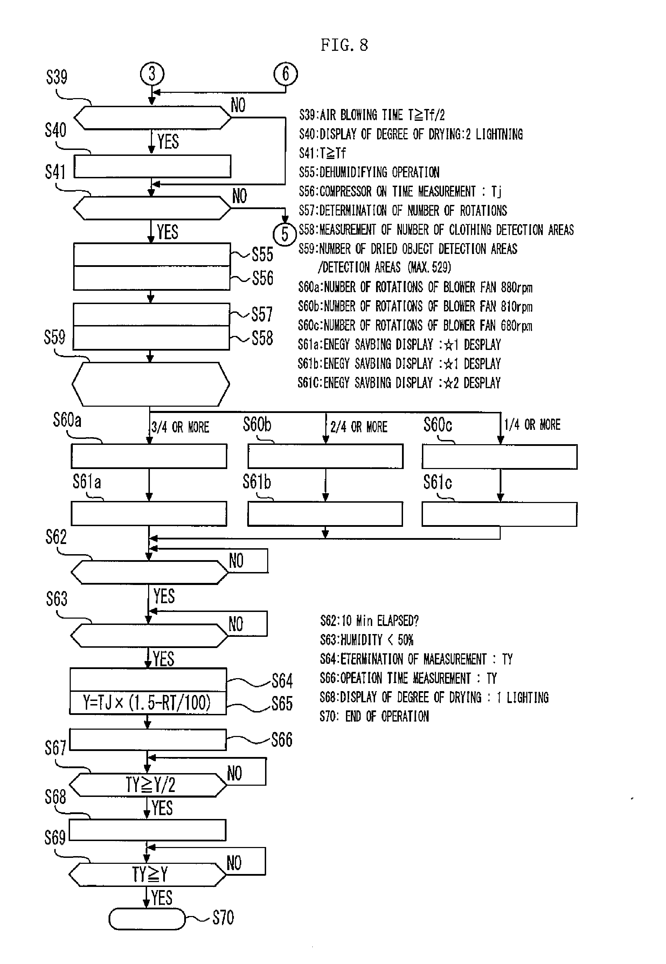

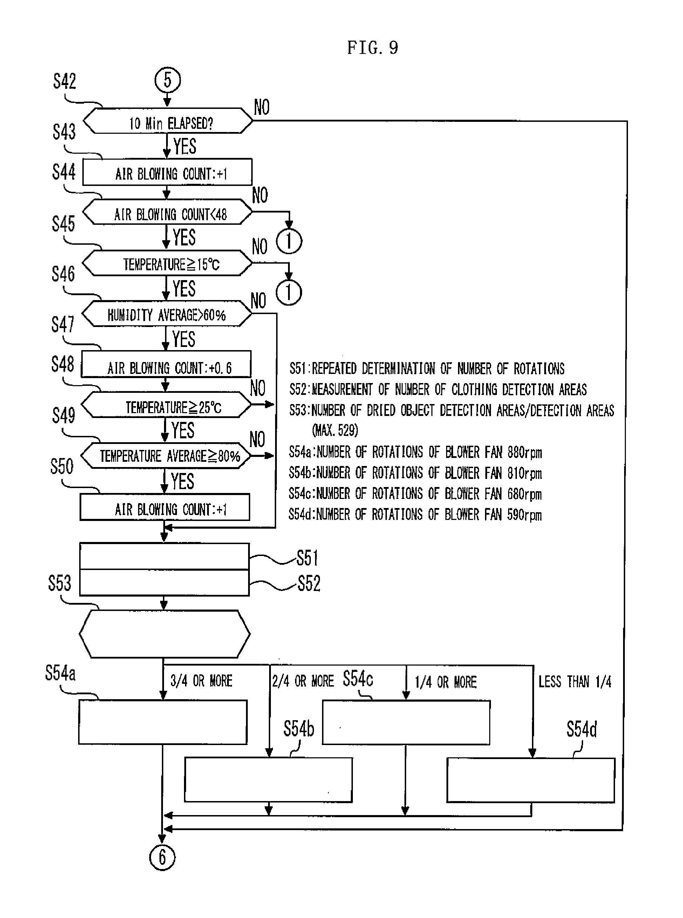

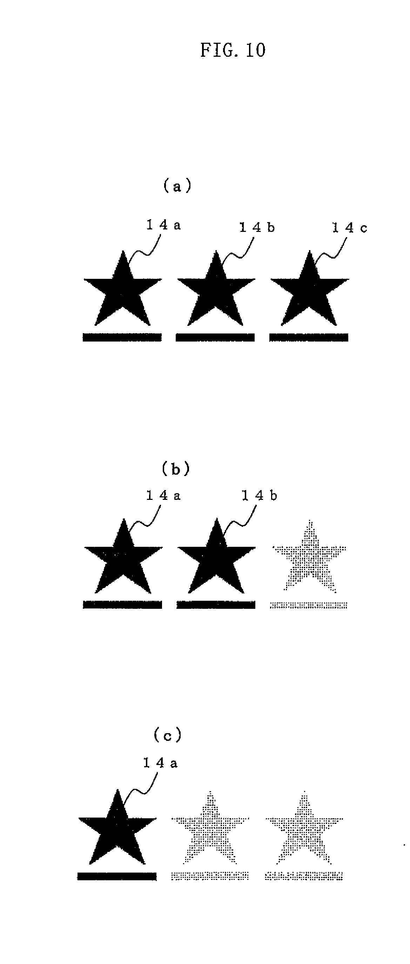

Figure 6 is a part of a flowchart showing the action in the energy-saving drying mode of the air conditioner in accordance with the first embodiment of the present invention, showing Step 0 to Step 18 and Step 71, Figure 7 is a part of the flowchart showing the action in the energy-saving drying mode of the air conditioner in accordance with the first embodiment of the present invention, showing Step 19 to Step 38, Figure 8 is a part of the flowchart showing the action in the energy-saving drying mode of the air conditioner in accordance with the first embodiment of the present invention, showing Step 39 to Step 70, and Figure 9 is a part of the flowchart showing the action in the energy-saving drying mode of the air conditioner in accordance with the first embodiment of the present invention, showing Step 42 to Step 54. Figure 10(a) is a schematic view showing a display example representing a high level of energy saving in the air conditioner in accordance with the first embodiment of the present invention, Figure 10(b) is a schematic view showing a display example representing a medium level of energy saving in the air conditioner in accordance with the first embodiment of the present invention, and Figure 10(c) is a schematic view showing a display example representing a low level of energy saving in the air conditioner in accordance with the first embodiment of the present invention.

In the standard drying mode, the dehumidifying means 5 is operated from the beginning of operation start, whereas, in the energy-saving drying mode, the dehumidifying means 5 is not operated at the beginning of operation start, and the fan motor 2a, which is an air blowing means, is operated to rotate the blower fan 2, whereby only the air blowing operation is performed.

The term of energy saving described in this description represents the reduction in electric power consumption; however, this term is not limited to this representation, and may be replaced with another representation expressing the reduction in electric power consumption such as electricity saving or power saving. For example, even if the representation of energy-saving drying mode is changed to an electricity-saving drying mode or a power-saving drying mode, the user can make the same recognition.

The action of the control circuit 7 is started by the input of the power switch 9. When, by operating the drying mode switch 11 provided in the operating part 8, it is detected that the energy-saving drying mode has been selected from the drying modes of objects to be dried, the measurement of total operation time T from the operation start is started (S0), the wind direction changeable means 1 is driven to enable air blowing through the exhaust port 103, and the air blowing operation is started by driving the fan motor 2a to rotate the blower fan 2 (S1). As described before, at this stage, the operation of the dehumidifying means 5 is not started.

With the start of air blowing operation, the preparation for detecting the arrangement of objects to be dried is started. The longitudinally turnable motor 1c and the transversely turnable motor 1d are controlled to enable the louvers 1a and 1b to be turned to regulate the air blowing directions (S2).

Thereafter, the control circuit 7 operates the infrared sensor 6. As described before, the detection range (the whole scanning range 200) of surface temperature detected by the infrared sensor 6 is approximately equal to the direction of the dried air B that is changed by the longitudinal louver 1a and the transverse louvers 1b, so that the surface temperature of the whole region within the range in which the louvers 1a and 1b can blow air can be detected. Therefore, the surface temperature in the whole scanning range 200 of the infrared sensor 6 is detected for each area divided into plural numbers (for example, 201 denotes an area of one section) (S3 and S4).

For example, for the objects to be dried such as wet clothing, since water is vaporized by the receipt of blown air, the surface temperature thereof becomes lower than the surrounding temperature. By detecting the range of the lowered temperature by using the infrared sensor 6, it is detected that the objects to be dried are arranged in this range.

The early-stage level of energy saving is displayed on the displaying means 12 as an energy saving level display mark 14 (S6), and the early-stage degree of drying of objects to be dried is displayed on the displaying means 12 as an object-to-be-dried display mark 13 (S5).

As shown in Figure 10(a), for the energy saving level display mark 14, the level of energy saving is represented by three star shapes 14a to 14c. When the level of energy saving is the highest, all of the three stars 14a to 14c are displayed.

In this example, as the level of energy saving becomes higher, the number of displayed marks increases. However, the display has only to be accomplished so that the difference in energy saving level can be seen. Even if the configuration is made such that as the level of energy saving becomes higher, the number of displayed marks decreases, the user can make the same recognition.

Also, the shape of the energy saving level display mark 14 may be a shape such as to show the level of energy saving, and is not limited to the star shape. Therefore, other figures and letters, for example, letters of energy saving level high, energy saving level medium, and energy saving level low may be displayed. Further, even if the representation of energy saving is changed to electricity saving or power-saving, the user can make the same recognition.

Similarly, the shape of the object-to-be-dried display mark 13 is not limited to the shape shown in Figure 2, and may be a shape such that it can be seen that the mark shows the objects to be dried. Also, the display may be changed according to the progress of dried state.

As shown in Figure 2, not only the energy saving level display mark 14, but also, for example, a triangle mark at the side of a letter display 15 "ENERGY-SAVING" is lighted to indicate that the energy-saving operation is being performed. Alternatively, by turning on and off the display mark light showing energy saving, it is possible to cause the user to recognize that the operation in which the electric power consumption is reduced is being performed.

At the stage at which the positions of objects to be dried can be detected, the control circuit 7 shifts to an action for determining the number of rotations of the blower fan 2 (S7), the number of divided areas, in which the objects to be dried are arranged, is counted (S8), and the amounts of the objects to be dried are calculated (S9). It can be determined that if the number of counted areas is large, the amounts of the objects to be dried are large, and if the number of counted areas is small, the amounts of the objects to be dried are small.

The control circuit 7 changes the number of rotations of the blower fan 2 according to the counted number of areas (S10a to S10d) to reduce the electric power consumption. For example, taking the number of all divided areas in the detectable range as X1, the number of divided areas counted as such that the objects to be dried are arranged as X2, the maximum air volume as Q, and the correction factors prepared in advance as m and n, the number of rotations of the blower fan 2 is set as the number of rotations that generates a blowing air amount satisfying the air volume F necessary for the objects to be dried that is calculated by a formula of F = m × (X1/X2) × Q + n.

Next, a process for measuring the temperature and humidity of the indoor air A is started. The process does not shift to the early-stage humidity determination until preset time has elapsed (S11 and S12) so that the temperature and humidity can be detected steadily.

After the preset time set, for example, at 10 minutes has elapsed, to make early-stage environment determination (S 13), the indoor air A is taken into the air conditioner housing 100 through the suction port 101 by the rotation of the blower fan 2, and, at this time, the control circuit 7 reads indoor temperature RT detected by the temperature sensor 3, and reads the indoor humidity RH1 detected by the humidity sensor 4 (S14).

Next, the control circuit 7 compares the detected temperature RT of the indoor air A with a preset temperature (S15). The preset temperature is set, for example, at 15°C, and if RT is lower than 15°C in S15, the process proceeds to S71, where the dehumidifying operation is started. If RT is 15°C or higher in S15, the process proceeds to S16.

If the process proceeds to S16, the control circuit 7 compares the detected humidity RH1 of the indoor air A with a preset humidity (S16). The preset humidity is set, for example, at 80%, and if RH1 is higher than 80% in S16, the process proceeds to S71, where the dehumidifying operation is started. If RH1 is 80% or lower in S16, the process proceeds to S17.

The condition of the indoor air A in the situation sifting from S16 to S 17 is a condition that the humidity is low and the temperature is high, so that it can be said that the objects to be dried that are, for example, wet are relatively easy to dry.

Also, the condition of the indoor air A in the situation sifting to S71 in S 15 and S16 is a condition that the objects to be dried cannot be dried sufficiently by air blowing. Therefore, the process directly shifts to the dehumidifying operation without the continuation of air blowing operation. Specifically, control is changed over so that drying is promoted to prevent the objects to be dried from becoming undried, whereby the objects to be dried are made able to be dried at the time of operation end.

Next, if the humidity RH1 is lower than the preset humidity and the temperature RT is higher than the preset temperature, the control circuit 7 carries out control for detecting the maximum value RHMax of humidity (S 17 and S18). If the control circuit 7 detects the maximum value RHMax of humidity, the process proceeds to S33, and if the control circuit 7 does not detect the maximum value RHMax of humidity, the process proceeds to S22.

For the detection of the maximum value RHMax of humidity, the detection is made by determining whether or not the average humidity RHAve for preset time, for example, 10 minutes begins to lower (S19 and S20). If the lowering condition is detected two times continuously (S31 and S32), it is determined that the maximum value RHMax of humidity is detected.

As the method for detecting the maximum value RHMax of humidity, the highest humidity among the detected humidities RH1 may be made the maximum value RHMax of humidity, or the humidity RHMax at the time when the humidity RH1 turns from rising to lowering may be made the maximum value RHMax of humidity.

When the process proceeds to S22, the condition of the indoor air A is checked (S22 to S30) while the temperature and humidity are measured until the maximum value RHMax of humidity can be detected, and the air blowing operation is continued. However, in this process, if the control circuit 7 determines that the process should be shifted directly to the dehumidifying operation without the continuation of air blowing operation (S24 and S25), the process proceeds to S71, where the dehumidifying operation is started.

Next, from S33, a process for determining the air blowing operation time is started. The control circuit 7 decides the maximum value RHMax of humidity, measures the temperature RT of the indoor air A at that time (S34), and again counts the number of divided areas in which the objects to be dried are arranged (S35). From this counted number of areas, a variable H for setting the air blowing operation time is determined according to the number of rotations (S36a to S36d).

The variable H is set so that, as the number of areas counted in S35 increases, the value of the variable H becomes smaller. For example, if the detected number of areas is not smaller than 3/4 of the total number of divided areas, H is set at 1.0, and if the detected number of areas is not smaller than 2/4 (1/2) thereof, H is set at 1.1. This is a process for setting the air blowing operation time according to the number of rotations to prevent a trouble from occurring in the drying condition because, in the case where the air blowing operation is performed by decreasing the number of rotations, if the air blowing operation time is the same, the progress status of drying differs.

Next, the control circuit 7 detects the change state of the maximum value RHMax of humidity (S37) and calculates the remaining air blowing operation time Tf (S38), and the process proceeds to S39. Herein, the air blowing time Tf is set so as to be longer with the increase in the maximum value RHMax of humidity. Thereby, even if the humidity is high, the dehumidifying operation time for which the electric power consumption is high can be shortened, so that a higher energy-saving effect can be achieved.

Thereafter, if air blowing time of 1/2 or more of Tf calculated in S38 has elapsed (S39), the display of the degree of drying is changed (S40). After the air blowing operation has been continued until the remaining air blowing operation time has been finished (S41), the process proceeds to the dehumidifying operation (S55).

By continuing the air blowing operation until the remaining air blowing operation time has been finished in S41, the humidity is kept in a state of being high, and wet damage may occur in a living space. To avoid this damage, the upper limit of air blowing operation time is set at 500 minutes at the maximum.

During the air blowing operation time, since wet damage occurs more easily with the increase in humidity, it is necessary to shorten the air blowing operation time according to the humidity. To shorten the air blowing operation time with the increase in humidity, the humidity is measured frequently (S42 to S50), and during the time when air blowing is performed, control for changing the number of rotations of the blower fan 2 is carried out continuously based on the counted number of areas (S54a to S54d).

Next, the process proceeds to S55, where the control circuit 7 starts the dehumidifying operation. The control circuit 7 operates the blower fan 2 and the dehumidifying means 5, and starts the measurement of the dehumidifying operation time TJ from the start of dehumidifying operation (S56), and thereafter the process proceeds to S57.

The control circuit 7 shifts to an action for determining the number of rotations of the blower fan 2 (S57). The control circuit 7 counts the number of divided areas in which the objects to be dried are arranged (S58), and calculates the amounts of the objects to be dried (S59). The control circuit 7 changes the number of rotations of the blower fan 2 according to the counted number of areas (S60a to S60c), and reduces the electric power consumption.

As in the air blowing operation, taking the number of all divided areas in the detectable range as X1, the number of divided areas counted as such that the objects to be dried are arranged as X2, the maximum air volume as Q, and the correction factors prepared in advance as m and n, the number of rotations of the blower fan 2 is set as the number of rotations that generates a blowing air amount satisfying the air volume F necessary for the objects to be dried that is calculated by a formula of F = m × (X1/X2) × Q+n.

Then, the control circuit 7 changes the display of the energy saving level display mark 14 on the displaying means 12 according to the change in the number of rotations of the blower fan 2 (S61 a to S61c). For example, when the number of rotations of the blower fan 2 is 810 rpm, since the level of energy saving is low, as shown in Figure 10(c), only one energy saving level display mark 14a is displayed. Also, when the number of rotations of the blower fan 2 is 680 rpm, since the level of energy saving is medium, as shown in Figure 10(b), two energy saving level display marks 14a and 14b are displayed.

Next, after 10 minutes has elapsed from the start of dehumidifying operation (S62), the control circuit 7 determines whether or not the humidity RH1 of the indoor air A is not higher than 50% (S63). If the humidity RH1 of the indoor air A is not higher than 50%, the process proceeds to S64.

In S64, a process for calculating finish time Y of dehumidifying operation is started. The finish time Y is calculated from the dehumidifying operation time TJ from the start of dehumidifying operation and the indoor temperature RT (S65), and the process proceeds to S66, where the remaining operation time TY of dehumidifying operation is measured.

If the remaining operation time TY of dehumidifying operation is not shorter than 1/2 of the finish time Y of dehumidifying operation (S67), the display of the object-to-be-dried display mark 13 that is displayed on the displaying means 12 and indicates the degree of drying is changed. For example, only one of three displays is lighted (S68). Thereby, the user can be notified that the drying progresses and approaches the finish.

The operation is continued, and if the remaining operation time TY of dehumidifying operation is not shorter than the finish time Y of dehumidifying operation (S69), the process proceeds to S70, where the operation is finished, and the operation of energy-saving drying mode is completed.

As described above, according to the first embodiment of the present invention, the number of rotations of the blower fan is changed based on the humidity of the indoor air, the surface temperature of the objects to be dried, and the number of areas in which the objects to be dried are arranged. Therefore, the electric power consumption can be reduced by carrying out high-efficiency air blowing control suitable for the amounts of the objects to be dried, and accordingly the level of energy saving can be displayed, so that the level of energy saving of the operation being performed can be confirmed. If a display indicating that the level of energy saving is high is being accomplished, the user can easily recognize that an operation in which the electric power consumption is reduced is being performed, so that the ease of use can be increased.

In the first embodiment of the present invention, there has been explained an example in which, in one operation mode, the displays of energy saving level display marks 14a to 14c are changed. However, the configuration may be such that when the operation mode is selected, the level of energy saving of each operation mode is set so that, for example, when the operation mode is the energy-saving drying mode, three energy saving level display marks 14a to 14c are displayed, and when the dehumidifying operation is performed, only one energy saving level display mark 14a is displayed. Since the level of energy saving is displayed so as to be changed according to the operation mode, the user can also use the display as the reference at the time when the operation mode is selected.

The numerical values of preset time, temperature, humidity, and the like that are used as the reference of control in the explanation of the first embodiment are one example, and are not limited to the above-described numerical values. The predetermined numerical values used as the reference can be set as appropriate according to the environment in which the air conditioner is used and the liking of user in the range of not departing from the scope of the present invention.

### Industrial Applicability

As described above, the air conditioner in accordance with the present invention can be used as a system for drying the wash, that is, objects to be dried, that is dried in a room.

### Description of symbols

1 wind direction changeable means, 1a longitudinal louver, 1b transverse louver, 1c longitudinally turnable motor, 1d transversely turnable motor, 2 blower fan, 2a fan motor, 3 temperature sensor, 4 humidity sensor, 5 dehumidifying means, 6 infrared sensor, 6a absorbing membrane, 6b thermistor, 7 control circuit, 8 operating part, 9 power switch, 10 dehumidification switch, 11 drying mode switch, 12 displaying means, 13 object-to-be-dried display mark, 14 energy saving level display mark, 14a to 14c example of energy saving level display mark, 15 letter display, 100 air conditioner housing, 101 suction port, 102 water storage tank, 103 e xhaustport, 200 whole scanning range, 201 divided area, A indoor air, B dried air.

## Claims

1. An air conditioner comprising:
dehumidifying means for removing water contained in air;
air blowing means, consisting of a motor and a blower fan, that sucks air in a room and blows out dried air, which is obtained by causing sucked air to pass through the dehumidifying means, into an interior of a room;
humidity detecting means for detecting a humidity of indoor air;
temperature detecting means for detecting a temperature of indoor air;
surface temperature detecting means for detecting a surface temperature in a room within a predetermined range;
displaying means for displaying information by using one or both of letters and figures; and
controlling means for controlling the air blowing means, the temperature detecting means, and the displaying means, wherein
from a surface temperature detected by the surface temperature detecting means, the controlling means detects, within the predetermined range, that objects to be dried such as wet clothing are arranged, and
according to a detection result, a number of rotations of the blower fan is changed during operation of the dehumidifying means or the air blowing means, and further, according to a changed number of rotations, a level of energy saving is displayed on the displaying means.

2. An air conditioner comprising:
dehumidifying means for removing water contained in air;
air blowing means, consisting of a motor and a blower fan, that sucks air in a room and blows out dried air, which is obtained by causing sucked air to pass through the dehumidifying means, into an interior of a room;
humidity detecting means for detecting a humidity of indoor air;
temperature detecting means for detecting a temperature of indoor air;
surface temperature detecting means for detecting a surface temperature in a room within a predetermined range;
displaying means for displaying information by using one or both of letters and figures; and
controlling means for controlling the air blowing means, the temperature detecting means, and the displaying means, wherein
after the controlling means performs air blowing operation for operating the air blowing means for predetermined time, the controlling means performs dehumidifying operation for operating the dehumidifying means, detects, from a surface temperature detected by the surface temperature detecting means and within the predetermined range, that objects to be dried such as wet clothing are arranged, changes a number of rotations of the blower fan during operation of the dehumidifying means or the air blowing means according to a detection result, and further displays a level of energy saving on the displaying means according to a changed number of rotations.

3. An air conditioner comprising:
dehumidifying means for removing water contained in air;
air blowing means, consisting of a motor and a blower fan, that sucks air in a room and blows out dried air, which is obtained by causing sucked air to pass through the dehumidifying means, into an interior of a room;
humidity detecting means for detecting a humidity of indoor air;
temperature detecting means for detecting a temperature of indoor air;
surface temperature detecting means for detecting a surface temperature in the room within a predetermined range;
operating means by which a plurality of operation modes can be selected and which is provided with an energy-saving drying mode;
displaying means for displaying information by using one or both of letters and figures; and
controlling means for controlling the air blowing means, the temperature detecting means, the operating means, and the displaying means, wherein
when a energy-saving drying mode is selected from the operation modes, the controlling means detects, from a surface temperature detected by the surface temperature detecting means and within the predetermined range, that objects to be dried such as wet clothing are arranged, changes a number of rotations of the blower fan during operation of the air blowing means according to a detection result, and further displays a level of energy saving on the displaying means according to a changed number of rotations.

4. An air conditioner comprising:
dehumidifying means for removing water contained in air;
air blowing means, consisting of a motor and a blower fan, that sucks air in a room and blows out dried air, which is obtained by causing sucked air to pass through the dehumidifying means, into an interior of a room;
humidity detecting means for detecting a humidity of indoor air;
temperature detecting means for detecting a temperature of indoor air;
surface temperature detecting means for detecting a surface temperature in a room within a predetermined range;
operating means by which a plurality of operation modes can be selected and which is provided with an energy-saving drying mode;
displaying means for displaying information by using one or both of letters and figures; and
controlling means for controlling the air blowing means, the temperature detecting means, the operating means, and the displaying means, wherein
when the energy-saving drying mode is selected from the operation modes,
after the controlling means performs air blowing operation for operating the air blowing means for predetermined time, the controlling means performs dehumidifying operation for operating the dehumidifying means, detects, from a surface temperature detected by the surface temperature detecting means and within the predetermined range, that objects to be dried such as wet clothing are arranged, changes a number of rotations of the blower fan during operation of the dehumidifying means or the air blowing means according to a detection result, and further displays a level of energy saving on the displaying means according to a changed number of rotations.

5. The air conditioner according to any of claims 1 to 4, wherein the level of energy saving is displayed by a plurality of figures, and when the level of energy saving is high, all of the figures are displayed, and when the level of energy saving is low, one of the figures is displayed.

6. The air conditioner according to any of claims 1 to 4, wherein the level of energy saving is displayed by a plurality of figures, and when the level of energy saving is high, one of the figures is displayed, and when the level of energy saving is low, all of the figures are displayed.

7. The air conditioner according to any of claims 1 to 6, wherein the controlling means performs operation of the air blowing means and determines whether or not the humidity of indoor air detected by the humidity detecting means is higher than a preset humidity, and if a humidity of indoor air is higher than the preset humidity, starts operation of the dehumidifying means immediately.

8. The air conditioner according to any of claims 1 to 6, wherein the controlling means performs operation of the air blowing means and determines whether or not the temperature of indoor air detected by the temperature detecting means is lower than a preset temperature, and if a temperature of indoor air is lower than the preset temperature, starts operation of the dehumidifying means immediately.

9. The air conditioner according to any of claims 1 to 8, wherein the controlling means determines, from a humidity of indoor air detected by the humidity detecting means, an operation time of the air blowing means before operation of the dehumidifying means is started.

10. The air conditioner according to any of claims 1 to 9, wherein, when the controlling means changes a number of rotations of the air blower fan, the controlling means changes an operation time of the air blowing means according to a changed number of rotations.

11. The air conditioner according to any of claims 1 to 10, wherein, based on the detection result of a temperature of indoor air detected by the temperature detecting means or a humidity of indoor air detected by the humidity detecting means or both of the temperature and the humidity, the controlling means changes a maximum operation time of the air blowing means before operation of the dehumidifying means is started.

12. The dehumidifier according to any of claims 1 to 11, wherein
the predetermined range is divided into a plurality of areas adjacent to each other in two perpendicularly intersecting axis line directions, and
the detection direction is changed successively so that the temperatures from one end part to other end part of each of the areas are detected individually by the controlling means, whereby the surface temperature distribution of the whole area is detected by the surface temperature detecting means.

13. The dehumidifier according to any of claims 1 to 11, wherein
the predetermined range is divided into a plurality of areas adjacent to each other in a vertical direction and a horizontal direction,
the wind direction changeable means can change the blowing-out direction of dried air to at least the vertical direction and horizontal direction, and
a direction of the surface temperature detecting means is controlled by the controlling means so that a temperature detection surface is directed to the blowing-out direction corresponding to the successive change of the blowing-out direction of the wind direction changeable means.

14. An air conditioner comprising:
dehumidifying means for removing water contained in air;
air blowing means, consisting of a motor and a blower fan, that sucks air in a room and blows out dried air, which is obtained by causing sucked air to pass through the dehumidifying means, into an interior of the room;
humidity detecting means for detecting a humidity of indoor air;
temperature detecting means for detecting a temperature of indoor air;
surface temperature detecting means for detecting a surface temperature in a room within a predetermined range;
operating means by which a plurality of operation modes can be selected;
displaying means for displaying information by using one or both of letters and figures; and
controlling means for controlling the air blowing means, the temperature detecting means, the operating means, and the displaying means, wherein
the controlling means displays a level of energy saving on the displaying means according to the selected operation mode.

15. An air conditioner comprising:
dehumidifying means for removing water contained in air;
air blowing means, consisting of a motor and a blower fan, that sucks air in a room and blows out dried air, which is obtained by causing sucked air to pass through the dehumidifying means, into an interior of the room;
humidity detecting means for detecting a humidity of indoor air;
temperature detecting means for detecting a temperature of indoor air;
surface temperature detecting means for detecting a surface temperature in the room within a predetermined range;
operating means which is provided with a plurality of operation modes and by which an energy-saving operation mode can be selected;
displaying means for displaying information by using one or both of letters and figures; and
controlling means for controlling the air blowing means, the temperature detecting means, the operating means, and the displaying means, wherein
when the energy-saving operation mode is selected, the controlling means displays, on the displaying means by using figures or letters, a fact that an energy-saving operation is being performed.
